# EUROPÄISCHE PATENTSCHRIFT

(11) **EP 1 412 427 B1**
(45) Veröffentlichungstag und Bekanntmachung des Hinweises auf die Patenterteilung: **27.08.2008**
(21) Anmeldenummer: 02758318.6
(22) Anmeldetag: 05.07.2002
(51) Int. Cl.: C08K 5/13, C09J 133/00

(54) **STABILISATOREN ENTHALTENDE UV-VERNETZBARE SCHMELZHAFTKLEBSTOFFE**
UV CROSS-LINKABLE MELT ADHESIVES CONTAINING STABILIZERS
COLLES AUTO-ADHESIVES FUSIBLES, RETICULABLES AUX UV, CONTENANT DES STABILISATEURS

(30) Priorität: 18.07.2001 DE 10134261
(43) Veröffentlichungstag der Anmeldung: 28.04.2004
(73) Patentinhaber: BASF SE, 67056 Ludwigshafen (DE)
(72) Erfinder: FINK, Ralf, 67105 Schifferstadt (DE); SCHUMACHER, Karl-Heinz, 67433 Neustadt (DE); DÜSTERWALD, Uwe, 66851 Queidersbach (DE); ERHARDT, Ulrich, 68526 Ladenburg (DE); MEYER, Harald, 67157 Wachenheim (DE)
(86) Internationale Anmeldenummer: PCT/EP2002/007489
(87) Internationale Veröffentlichungsnummer: WO 2003/010231

(56) Entgegenhaltungen:
- EP-A- 0 048 071
- EP-A- 0 343 467
- PATENT ABSTRACTS OF JAPAN vol. 015, no. 313 (C-0857), 9. August 1991 (1991-08-09) & JP 03 115481 A (NIPPON CARBIDE IND CO INC), 16. Mai 1991 (1991-05-16)

## Beschreibung

Die Erfindung betrifft eine Zusammensetzung, enthaltend
- ein aus der Schmelze zu verarbeitendes, wasser- und lösemittelfreies Polyacrylat und
- ein Antioxidationsmittel, welches mindestens eine aromatisch gebundene Hydroxylgruppe enthält und ausschließlich aus Wasserstoff, Kohlenstoff und Sauerstoffatomen aufgebaut ist.

UV-Licht vernetzbare Polymerisate und ihre Verwendung als Klebstoff, z.B. als Schmelzhaftklebstoff, sind z.B. aus DE-A-2 411 169, EP-A-246 848, DE-A-4 037 079 oder DE-A-3 844 444 bekannt.

Stabilisierte Schmelzhaftklebestoffe werden in der nicht vorveröffentlichten Patentanmeldung DE-A-10008295 beschrieben.

Für Schmelzklebstoffen werden Polymerisate verwendet, welche bei Raumtemperatur fest sind und bei höheren Temperaturen aus der Schmelze auf die gewünschten Substrate aufgetragen werden.

Benötigte Polymerisate werden oft schon im fließfähigen Zustand angeliefert (Tankwagen) und bis zur späteren Verarbeitung im fließfähigen Zustand gehalten.

Bei den benötigten Temperaturen kann insbesondere unter Luftatmosphäre zu thermisch induzierten Vernetzungen kommen. Gewünscht ist daher der Zusatz von wirksamen Stabilisatoren, die insbesondere unter aeroben Bedingungen wirksam sind.

Die Stabilisatoren dürfen insbesondere die anwendungstechnischen Eigenschaften bei der späteren Verwendung als Klebstoff nicht negativ beeinflussen.

Besonders problematisch sind dabei UV-vernetzbare Polymerisate, welche zur späteren UV-Vernetzung einen Fotoinitiator enthalten. Die Stabilisatoren können die Wirkung des Fotoinitiators beeinträchtigen, das heißt, die später gewollte UV-Vernetzung verhindern oder vermindern und zu ungünstigen anwendungstechnischen Eigenschaften, z.B. einer mangelhaften Kohäsion in der Klebstoffschicht, führen.

Demgemäß wurde die eingangs definierte Zusammensetzung, ihre Verwendung als Schmelzhaftklebstoff und ein Verfahren zur Auftragung des Schmelzhaftklebstoffes auf geeignete Substrate gefunden.

Die erfindungsgemäße Zusammensetzung enthält ein Polyacrylat.

Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Bevorzugt ist das Polyacrylat zu mindestens 40 Gew.-% besonders bevorzugt zu mindestens 60 Gew.-%, ganz besonders bevorzugt zu mindestens 80 Gew.-% aus
C₁ - C₁₈ Alkyl (meth) acrylaten aufgebaut.

Genannt seien insbesondere C₁-C₈ Alkyl(meth)acrylate, z.B. Methyl(meth)acrylat, Ethyl(meth)acrylat, n-Butyl(meth)acrylat, 2-Ethylhexyl(meth)acrylat.

Es handelt sich um ein mit UV-Licht vernetzbares Polyacrylat. Der erfindungsgemäßen Zusammensetzung kann zur UV-Vernetzung ein Fotoinitiator zugesetzt werden. Der Fotoinitiator kann aber auch an das Polyacrylat gebunden sein.

Durch Bestrahlung mit energiereichem Licht, insbesondere UV-Licht bewirkt der Fotoinitiator eine Vernetzung des Polymeren, vorzugsweise durch eine chemische Propfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Die erfindungsgemäße Zusammensetzung enthält vorzugsweise 0,0001 bis 1 mol, besonders bevorzugt 0,0002 bis 0,1, ganz besonders bevorzugt 0,0003 bis 0,01 mol des Fotoinitiators, bzw. der als Fotoinitiator wirksamen, an das Polymer gebundenen Molekülgruppe, pro 100 g Polyacrylat.

Beim Fotoinitiator handelt es sich z.B. um Acetophenon, Benzophenon, Benzoinether, Benzildialkylketale oder deren Derivate.

Bevorzugt ist der Fotoinitiator an das Polyacrylat gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder Methacrylgruppe.

Geeignete copolymerisierbare Fotoinitiatoren sind Acetophenon-oder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben.

Bevorzugte Acetophenon- und Benzophenonderivate sind solche der Formel 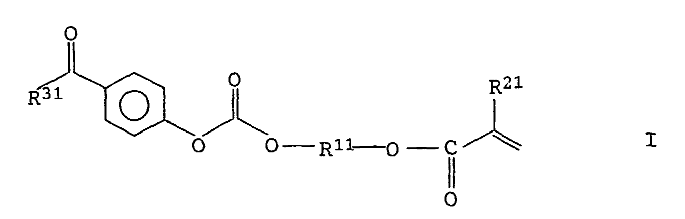 worin R¹¹ für einen organischen Rest mit bis zu 30 C-Atomen, R²¹ für ein H-Atom oder eine Methylgruppe und R³¹ für eine gegebenenfalls substituierte Phenylgruppe oder eine C₁-C₄-Alkylgruppe steht.

R¹¹ steht besonders bevorzugt für eine Alkylengruppe, insbesondere für eine C₂-C₈-Alkylengruppe.

R³¹ steht besonders bevorzugt für eine Methylgruppe oder eine Phenylgruppe.

Weitere Monomere, aus denen das Polyacrylat aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren.

Als vinylaromatische Verbindungen kommen z.B. Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fummarsäure.

Weitere Monomere sind z. B. auch Hydroxylgruppen enthaltende Monomere, insbesondere C₁-C₁₀-Hydroxyalkyl(meth)acrylate, (Meth)acrylamid.

Darüberhinaus seien Phenyloxyethylglykolmono-(meth)acrylat, Glydidylacrylat, Glycidylmethacrylat, Amino-(meth)acrylate wie 2-Aminoethyl(meth)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Das Polyacrylat hat vorzugsweise einen K-Wert von 30 bis 80, besonders bevorzugt von 40 bis 60, gemessen in Tetrahydrofuran (1%ige Lösung, 21°C).

Der K-Wert nach Fikentscher ist ein Maß für das Molekulargewicht und Viskosität des Polymerisats.

Die Glasübergangstemperatur (Tg) des Polymerisats beträgt vorzugsweise -60 bis +10°C, besonders bevorzugt -55 bis 0°C, ganz besonders bevorzugt -55 bis -10°C.

Die Glasübergangstemperatur des Polyacrylates läßt sich nach üblichen Methoden wie Differentialthermoanalyse oder Differential Scanning Calorimetrie (s. z.B. ASTM 3418/82, sog. "midpoint temperature" bestimmen.

Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln, insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon, Methylisobutylketon und Ester, wie Essigsäureethylester sowie Gemische von Lösungsmitteln der genannten Art eingesetzt werden, wobei Gemische, die Iso-propanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymerisate können dann in lösungsmittelfreiem Zustand, d.h. als Schmelzen, eingesetzt werden. In manchen Fällen ist es auch von Vorteil, die neuen UV-vernetzbaren Polymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Die in der erfindungsgemäßen Zusammensetzung verwendeten Polyacrylate sind wasser- und lösungsmittelfrei. Ein Restgehalt an Lösungsmitteln, z.B. organischen Lösungsmitteln und/oder Wasser, unter 2 Gew.-Teilen, insbesondere unter 1 Gew.-Teil, besonders bevorzugt unter 0,5 Gew.-Teilen, ganz besonders bevorzugt unter 0,2 Gew.-Teilen Lösungsmittel, bezogen auf 100 Gew.-Teile Polyacrylat kann jedoch noch gegeben sein.

Die erfindungsgemäße Zusammensetzung enthält neben dem Polyacrylat ein Antioxidationsmittel, welches mindestens eine aromatisch gebundene, insbesondere an eine Phenylgruppe gebundene Hydroxylgruppe enthält und ausschließlich aus Wasserstoff, Kohlenstoff und Sauerstoffatomen aufgebaut ist. Insbesondere können 1 bis 3 derartige Hydroxylgruppen vorhanden sein.

Bevorzugte Antioxidationsmittel weisen in beiden ortho-Stellungen zu mindestens einer der aromatischen Hydroxylgruppen eine C₁-C₆-Alkylgruppe, vorzugsweise ene tertiäre Butylgruppe auf.

Derartige Antioxidationsmittel sind z.B. insbesondere solche der Formel 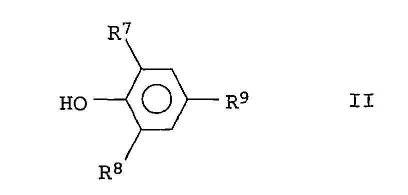 worin R⁷, R⁸ und R⁹ unabhängig voneinander für eine C₁₋₆-Alkylgruppe stehen. Besonders bevorzugt stehen R⁷ und R⁸ für eine teritäre Butylgruppe; und R⁹ für eine C₁-C₄-Alkylgruppe, ganz besonders bevorzugt steht R⁹ für eine Methylgruppe. Besonders bevorzugt ist die Verbindung mit R⁷ und R⁸ = tertiär Butyl und R⁹ = Methyl (erhältlich als Ralox BHT von Raschig GmbH).

Bevorzugt sind weiterhin Antioxidationsmittel, die mindestens eine Ethergruppe enthalten. Es können z.B. 1 bis 6 Ethergruppen vorhanden sein.

Besonders geeignete Ethergruppen sind Alkoxygruppen, insbesondere C₁-C₄ Alkoxygruppen und besonders bevorzugt Methoxygruppen. Die Alkoxygruppen sind vorzugsweise direkt an ein aromatisches Ringsystem insbesondere eine Phenylgruppe gebunden, besonders bevorzugte die Phenylgruppe, an die auch die obigen Hydroxylgruppen gebunden sind.

Bevorzugte Antioxidationsmittel sind daher auch chemische Verbindungen der folgenden Formel 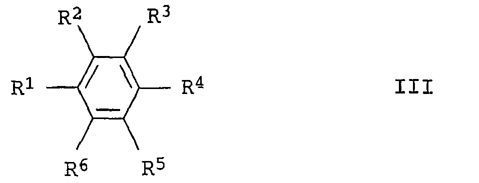 worin
mindestens einer, bevorzugt einer der Reste R¹ bis R⁶ für eine Hydroxylgruppe und
mindestens einer, bevorzugt einer der Reste R¹ bis R⁶ für eine Ethergruppe der Formel

- O - X IIIa

oder der Formel

- Y - O - X IIIb

worin X für eine einwertige Kohlenwasserstoffgruppe steht, die gegebenenfalls durch Hydroxylgruppen, Estergruppen oder weitere Ethergruppen substituiert oder unterbrochen sein kann und ein Molgewicht von bis zu 1000 g/mol hat
und Y für eine zweiwertige Kohlenwasserstoffgruppe, welche gegebenenfalls ebenso durch Hydroxylgruppen, Estergruppen oder weitere Ethergruppen substituiert oder unterbrochen sein kann und ein Molgewicht von bis zu 500 g/mol hat,
steht und
die übrigen Reste R¹ bis R⁶ unabhängig voneinander für ein Wasserstoffatom oder eine C₁ bis C₆ Alkylgruppe stehen.

Ein bevorzugter Fall sind Ethergruppen der Formel IIIa, in denen X für eine Alkylgruppe, insbesondere eine C₁-C₄ Alkylgruppe, besonders bevorzugt eine Methylgruppe steht, IIIa entspricht dann einer Alkoxygruppe, insbesondere Methoxygruppe (s.o.). In diesem Fall steht insbesondere nur einer der Reste R¹ bis R⁶ für eine Hydroxylgruppen, 1 oder 2 der Reste für eine Alkoxygruppe, insbesondere Methoxygruppe, und die übrigen Reste R¹ bis R⁶ unabhängig voneinander für ein Wasserstoffatom oder eine C₁ bis C₆ Alkylgruppe, insbesondere auch tert. Butylgruppen (vorzugsweise in ortho Position zur Hydroxylgruppe).

Folgende Verbindung seien beispielhaft aufgeführt:

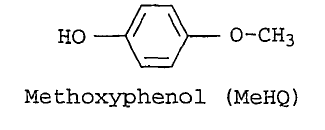

Ein bevorzugter Fall für Ethergruppen IIIb, sind Ethergruppen, in denen Y für eine Alkylengruppe, insbesondere eine C₂-C₆ Alkylengruppe steht, welche durch eine Estergruppe 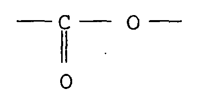 unterbrochen ist
und X für eine Alkylarylgruppe steht, wobei die Alkylgruppe ebenfalls durch Ether- oder Estergruppen unterbrochen sein kann und die Arylgruppe durch Hydroxylgruppen oder Alkylgruppen, insbesondere C₁-C₆ Alkylgruppen substituiert sein kann.

Für diesen Fall seien folgende Verbindungen beispielhaft aufgeführt:

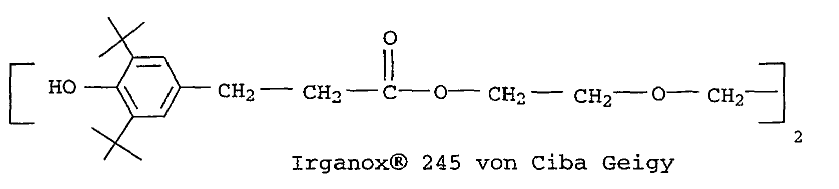

Ganz besonders bevorzugt sind Antioxidationsmittel, welche zusätzlich zur aromatisch gebundenen Hydroxylgruppe eine Ethergruppe enthalten und welche zumindest bei einer der aromatisch gebundenen Hydroxylgruppen zwei ortho-ständige C₁-C₆-Alkyle, insbesondere zwei tertiär-Butylgruppen, als Substituenten aufweisen.

Bei dem Antioxidationsmittel handelt es sich bevorzugt um eine niedermolekulare Verbindung mit einem Molekulargewicht unter 1500 g/mol, insbesondere unter 1000 g/mol. In Betracht kommen jedoch auch polymere Antioxidationsmittel mit entsprechenden Hydroxylgruppen und gegebenenfalls Ethergruppen.

Es können auch verschiedene Antioxidationsmittel im Gemisch eingesetzt werden.

Die erfindungsgemäße Zusammensetzung kann neben dem Polyacrylat und dem Antioxidationsmittel gegebenenfalls noch weitere Zusatzstoffe, z.B. Tackifier, wie Abietinsäureester, andere Stabilisatoren oder Weichmacher enthalten.

Der Gehalt des Antioxidationsmittels in der Zusammensetzung beträgt vorzugsweise 0,001 bis 3 Gew.-Teile, besonders bevorzugt 0,005 bis 2 Gew.-Teile, ganz besonders bevorzugt 0,005 bis 0,1 Gew.-Teile und insbesondere 0,01 bis 0,08 Gew.-Teile bezogen auf 100 Gew.-Teile Polyacrylat.

Die erfindungsgemäße Zusammensetzung eignet sich zur Herstellung von Beschichtungen, insbesondere eignet sie sich als Schmelzhaftklebstoff und entsprechend zur Herstellung von Schmelzhaftklebstoffbeschichtungen, z.B. auf Etiketten, Klebebändern und Folien. Die Etiketten können z.B. aus Papier oder Kunststoffen wie Polyester, Polyolefine oder PVC sein. Die Klebebänder oder Folien können ebenfalls aus den vorstehenden Kunststoffen sein.

Zur Herstellung der Beschichtungen können die erfindungsgemäßen Zusammensetzungen vorzugsweise als Schmelze auf die zu beschichtenden Substrate aufgetragen werden.

Vorzugsweise wird die Zusammensetzung dazu auf 60 bis 200°C erhitzt, insbesondere auf 90 bis 160°C erhitzt, so daß sie als Schmelze vorliegt.

Die Schmelze kann gegebenenfalls bei hohen Temperaturen, z.B. von 60 bis 160°C, insbesondere von 80 bis 140°C, mehrere Tage, z.B. eine Woche, gelagert oder transportiert werden, ohne daß eine thermische Vernetzung festzustellen ist.

Danach kann die Zusammensetzung als Schmelze, d.h. im allgemeinen bei Temperaturen von 80 bis 160°C auf Substrate, wie sie z.B. oben genannt sind, aufgetragen werden.

Bevorzugte Schichtdicken sind z.B. 2 bis 200 µm, besonders bevorzugt 5 bis 80, ganz besonders bevorzugt 10 bis 80 µm.

Im Falle UV-Licht vernetzbarer Polyacrylate kann dann mit energiereicher Strahlung, vorzugsweise UV-Licht bestrahlt werden, so daß eine Vernetzung erfolgt.

Im allgemeinen werden die beschichteten Substrate dazu auf ein Transportband gelegt und das Transportband an einer Strahlungsquelle, z.B. einer UV-Lampe vorbeigeführt.

Der Vernetzungsgrad der Polymerisate hängt von der Dauer und Intensität der Bestrahlung ab.

Vorzugsweise beträgt die Strahlungsenergie insgesamt 100 bis 1500 mJ/cm² (Gesamt UV-Dosis, gemessen mit dem UV-Power Puck) bestrahlte Fläche.

Die erhaltenen, beschichteten Substrate können vorzugsweise als Selbstklebeartikel, wie Etiketten, Klebebänder oder Schutzfolien Verwendung finden.

Die erhaltenen, mit UV-Licht vernetzten Schmelzklebstoffbeschichtungen haben gute anwendungstechnische Eigenschaften, z.B. eine gute Haftung und hohe innere Festigkeit. Trotz der Gegenwart des Antioxidationsmittels bleiben die Polyacrylate gut mit UV-Licht vernetzbar.

Das Antioxidationsmittel verhindert eine durch Sauerstoff und/oder Wärme induzierte Vernetzung der Polyacrylate; die Polyacrylate sind auch unter aeroben Bedingungen lagerstabil.

In den folgenden Beispielen wurde acResin® DS 3532 (ein UV-vernetzbares Polyacrylat der BASF auf Basis von Ethylhexylacrylat und einem Fotoinitiator der FOrmel I, mit einer Glasübergangstemperatur von -60°C) mit jeweils 0,02 Gew.-% Irganox® 245 (ein Stabilisator der Ciba-Geigy), Ralox BHT (von Raschig GmbH) 4-Methoxyphenol (MeHQ) und einem Referenzantioxidant "Phenolphosphorester" Irganox 1222 versetzt und bei 140°C unter Luftatmosphäre getempert. Der thermisch induzierte Vernetzungsprozess wurde anhand des K-Wertes und optisch anhand der Fließfähigkeit verfolgt: Die Referenzprobe ohne einen Zusatz war bereits nach 48 h vernetzt, genauso mit Referenzantioxidant "Phenolphosphorester" (Irganox 1222). Der Zusatz der erfindungsgemäßen Antioxidantien Irganox 245 und insbesondere der Zusatz von MeHQ und ganz besonders 2,6 Di-tert.Butyl-4-Methylphenol (Ralox BHT) bewirkt eine deutliche Verlangsamung des thermischen Vernetzungprozesses.

| Lagerzeit Tage | K-Wert [ohne Additiv] | K-Wert [+0,02 Gew.-% Irganox 1222] Referenz-Antioxidant | K-Wert [+0,02 Gew.-% Irganox 245] | K-Wert [+0, 02 Gew.-% MeHQ] | K-Wert [+0, 02 Gew.-% Ralox BHT] |
|---|---|---|---|---|---|
| 0 | 54,3 | 53,0 | 53,0 | 54,5 | 46,9 |
| 2 | geliert | geliert | 53,1 | 54,3 | 47,2 |
| 4 | geliert | geliert | 54,2 | 54,9 | 47,3 |
| 8 | geliert | geliert | geliert | 54,8 | 47,1 |
| 10 | geliert | geliert | geliert | 54,5 | 47,1 |
| 12 | geliert | geliert | geliert | 55,3 | 47,3 |
| 14 | geliert | geliert | geliert | 56,1 | 47,7 |
| 15 | geliert | geliert | geliert | geliert | 48,5 |
| 16 | geliert | geliert | geliert | geliert | 49,0 |
| 17 | geliert | geliert | geliert | geliert | geliert |

acResin DS 3532 wurde auf ein Trägermaterial (Hostaphan RN 36) appliziert (20 g/m²), anschließend mittels UV-Licht der Wellenlänge 260-280 nm (IST-CK-Strahler, H-Spektrum 4,2 mJ/cm UV-C Dosis) vernetzt. Die Prüfung der erzielten Vernetzung erfolgt anhand der Scherfestigkeit (in Anlehnung an FINAT FTM 8: 10 min Kontaktzeit, 25x25 mm Verklebungsfläche, 1kg Belastung, gemessen wird die Zeit bis der Verbund unter der Belastung reisst). Entsprechend wurde mit einer Zusammensetzung verfahren, welche zusätzlich 0,02 % Ralox BHT enthält.

| | |
|---|---|
| acResin DS 3532 | Scherfestigkeit, 25x25 mm, 1 kg 10 min Kontaktzeit [Stunden] |
| ohne Zusatz | ca. 100, adhäsives Bruchbild |
| mit 0,02 Gew.-% Ralox BHT | ca. 100, adhäsives Bruchbild |

Auch am adhäsiven Bruchbild ist die hohe Kohäsion, d.h. die hohe Vernetzung und damit verbunden die hohe innere Festigkeit in der Klebstoffschicht zu erkennen.

Adhäsives Bruchbild heißt, dass der Riss nicht innerhalb der Klebstoffschicht erfolgt, sondern an der Grenzfläche Substrat/Klebstofffilm und daher auf dem Substrat keine Klebstoffreste verbleiben.

## Patentansprüche

1. Zusammensetzung, bestehend aus
- einem aus der Schmelze zu verarbeitenden, wasser- und lösemittelfreien mit UV-Licht vernetzbaren Polyacrylat und
- einem Antioxidationsmittel, welches mindestens eine aromatisch gebundene Hydroxylgruppe enthält und ausschließlich aus Wasserstoff, Kohlenstoff und Sauerstoffatomen aufgebaut ist.

2. Zusammensetzung gemäß Anspruch 1, **dadurch gekennzeichnet, dass** das Polyacrylat zu mehr als 60 Gew.-% aus Acrylmonomeren besteht.

3. Zusammensetzung gemäß Anspruch 1 oder 2, **dadurch gekennzeichnet, dass** das Polyacrylat eine Glasübergangstemperatur von -55 bis -10°C aufweist.

4. Zusammensetzung gemäß einem der Ansprüche 1 bis 3, **dadurch gekennzeichnet, dass** das Polyacrylat einen K-Wert von 30 bis 80, gemessen in Tetrahydrofuran (1%ige Lösung, 21°C) hat.

5. Zusammensetzung gemäß einem der Ansprüche 1 bis 4, **dadurch gekennzeichnet, dass** sich in beiden ortho-Positionen zur aromatischen Hydroxylgruppe eine C₁-C₆-Alkylgruppe, vorzugsweise eine tertiär Butylgruppe befindet.

6. Zusammensetzung gemäß einem der Ansprüche 1 bis 5, **dadurch gekennzeichnet, dass** das Antioxidationsmittel zusätzlich eine Ethergruppe enthält.

7. Zusammensetzung gemäß einem der Ansprüche 1 bis 5, **dadurch gekennzeichnet, dass** es sich bei dem Antioxidationsmittel um chemische Verbindungen der folgenden Formel handelt: 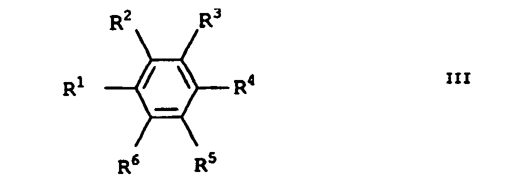 worin
mindestens einer der Reste R¹ bis R⁶ für eine Hydroxylgruppe und 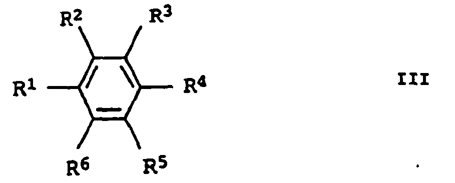 worin
mindestens einer der Reste R¹ bis R⁶ für eine Hydroxylgruppe und
mindestens einer der Reste R¹ bis R⁶ für eine Ethergruppe der Formel
- O - X IIIa
oder der Formel
-Y-O- X IIIb
worin X für eine einwertige Kohlenwasserstoffgruppe steht, die gegebenenfalls durch Hydroxylgruppen, Estergruppen oder weitere Ethergruppen substituiert oder unterbrochen sein kann und ein Molgewicht von bis zu 1000 g/mol hat
und Y für eine zweiwertige Kohlenwasserstoffgruppe, welche gegebenenfalls ebenso durch Hydroxylgruppen, Estergruppen oder weitere Ethergruppen substituiert oder unterbrochen sein kann und ein Molgewicht von bis zu 500 g/mol hat,
steht und
die übrigen Reste R¹ bis R⁶ unabhängig voneinander für ein Wasserstoffatom oder eine C₁ bis C₆ Alkylgruppe stehen.

8. Zusammensetzung gemäß einem der Ansprüche 1 bis 7, **dadurch gekennzeichnet, dass** die Menge des Antioxidationsmittels 0,005 bis 0,1 Gew.-teile, bezogen auf 100 Gew.-teile Polyacrylat beträgt.

9. Im geschmolzenen Zustand vorliegende Zusammensetzungen gemäß einem der Ansprüche 1 bis 8.

10. Verwendung der Zusammensetzung gemäß einem der Ansprüche 1 bis 9 als Schmelzhaftklebstoff.

11. Verfahren zur Herstellung von Beschichtungen, insbesondere Schmelzhaftstoffbeschichtungen, **dadurch gekennzeichnet, dass** Zusammensetzungen gemäß einem der Ansprüche 1 bis 8
a) bei Temperaturen von 60 bis 200°C geschmolzen werden
b) gegebenenfalls als Schmelze bei erhöhten Temperaturen gelagert werden
c) als Schmelze auf Substrate aufgetragen werden und
d) zur Vernetzung anschließend mit energiereichem Licht bestrahlt werden.

12. Verfahren gemäß Anspruch 11, **dadurch gekennzeichnet, dass** mindestens einer der Verfahrensschritte a) bis d) unter aeroben Bedingungen, das heißt in Gegenwart von Luftsauerstoff durchgeführt wird.

## Claims

1. A composition consisting of
- a melt-processable, water- and solvent-free UV-crosslinkable polyacrylate and
- an antioxidant containing at least one aromatic hydroxyl group and composed exclusively of hydrogen, carbon and oxygen atoms.

2. A composition as claimed in claim 1, wherein the polyacrylate is composed of more than 60% by weight of acrylic monomers.

3. A composition as claimed in claim 1 or 2, wherein the polyacrylate has a glass transition temperature of from -55 to -10°C.

4. A composition as claimed in any of claims 1 to 3, wherein the polyacrylate has a K value of from 30 to 80 as measured in tetrahydrofuran (1% strength solution at 21°C).

5. A composition as claimed in any of claims 1 to 4, wherein in both positions ortho to the aromatic hydroxyl group there is a C₁-C₆ alkyl group, preferably a tertiary-butyl group.

6. A composition as claimed in any of claims 1 to 5, wherein the antioxidant also contains an ether group.

7. A composition as claimed in any of claims 1 to 5, wherein the antioxidant comprises chemical compounds of the formula; 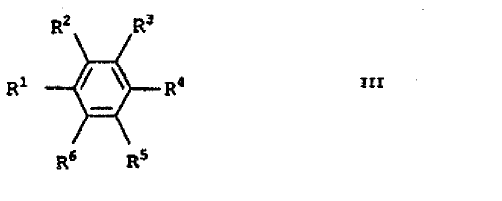 where
at least one of the radicals R¹ to R⁶ is a hydroxyl group and
at least one of the radicals R¹ to R⁶ is an ether group of the formula 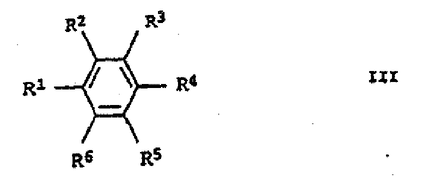
**- O - X** **IIIa**
or of the formula
**- Y - O - X** **IIIb**
where X is a monovalent hydrocarbon group which may be substituted or interrupted by hydroxyl, ester or further ether groups and has a molar weight of up to 1000 g/mol
and Y is a divalent hydrocarbon group which may likewise be substituted or interrupted by hydroxyl, ester or further ether groups and has a molar weight of up to 500 g/mol
and
the remaining radicals R¹ to R⁶ are each independently a hydrogen atom or a C₁ to C₆ alkyl group.

8. A composition as claimed in any of claims 1 to 7, wherein the amount of antioxidant is from 0.005 to 0.1 part by weight per 100 parts by weight of polyacrylate.

9. A composition as claimed in any of claims 1 to 8 in the melted state.

10. The use of a composition as claimed in any of claims 1 to 9 as a hotmelt pressure sensitive adhesive.

11. A process for producing coatings, especially hotmelt pressure sensitive adhesive coatings, which comprises
a) melting a composition as claimed in any of claims 1 to 8 at from 60 to 200°C,
b) where appropriate, storing it as a melt at elevated temperatures,
c) applying it as a melt to a substrate, and
d) then exposing it to high-energy light for the purpose of crosslinking.

12. A process as claimed in claim 11, wherein at least one of steps a) to d) is conducted under aerobic conditions, i.e., in the presence of atmospheric oxygen.

## Revendications

1. Composition, constituée par
- un polyacrylate à transformer à partir de la masse fondue, exempt d'eau et de solvant, réticulable à la lumière UV et
- un antioxydant, qui contient au moins un groupe hydroxyle lié aromatiquement et qui est exclusivement constitué par de l'hydrogène, du carbone et des atomes d'oxygène.

2. Composition selon la revendication 1, **caractérisée**
**en ce que** le polyacrylate est constitué à raison de plus de 60% en poids de monomères d'acryle.

3. Composition selon la revendication 1 ou 2, **caractérisée**
**en ce que** le polyacrylate présente une température de transition vitreuse de -55 à -10°C.

4. Composition selon l'une quelconque des revendications 1 à 3, **caractérisée**
**en ce que** le polyacrylate présente une valeur K de 30 à 80, mesurée dans du tétrahydrofuranne (solution à 1%, 21°C).

5. Composition selon l'une quelconque des revendications 1 à 4, **caractérisée**
**en ce que,** dans les deux positions ortho par rapport au groupe hydroxyle, se trouve un groupe alkyle en C₁-C₆, de préférence un groupe tert-butyle.

6. Composition selon l'une quelconque des revendications 1 à 5, **caractérisée**
**en ce que** l'antioxydant contient en outre un groupe éther.

7. Composition selon l'une quelconque des revendications 1 à 5, **caractérisée**
**en ce qu'**il s'agit, pour l'antioxydant, de composés chimiques présentant la formule suivante : 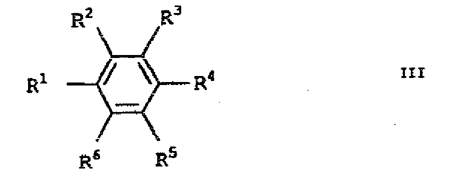 où
au moins un des radicaux R¹ à R⁶ représente un groupe hydroxyle et 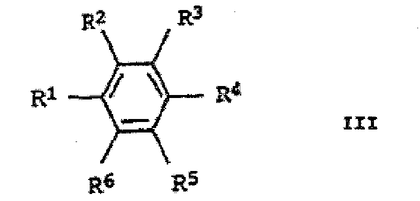 où
au moins un des radicaux R¹ à R⁶ représente un groupe hydroxyle et
au moins un des radicaux R¹ à R⁶ représente un groupe éther de formule
**- O- X** **IIIa**
ou de formule
**- Y - O - X** **IIIb**
où X représente un groupe hydrocarboné monovalent, qui peut le cas échéant être substitué ou interrompu par des groupes hydroxyle, des groupes ester ou d'autres groupes éther et qui présente un poids moléculaire allant jusqu'à 1000 g/mole
et Y représente un groupe hydrocarboné divalent, qui peut le cas échéant également être substitué ou interrompu par des groupes hydroxyle, des groupes ester ou d'autres groupes éther et qui présente un poids moléculaire allant jusqu'à 500 g/mole
et
les autres radicaux R¹ à R⁶ représentent, indépendamment l'un de l'autre, un atome d'hydrogène ou un groupe alkyle en C₁ à C₆.

8. Composition selon l'une quelconque des revendications 1 à 7, **caractérisée**
**en ce que** la quantité d'antioxydant est de 0,005 à 0,1 parties en poids, par rapport à 100 parties en poids de polyacrylate.

9. Compositions selon l'une quelconque des revendications 1 à 8 se trouvant à l'état fondu.

10. Utilisation de la composition selon l'une quelconque des revendications 1 à 9 comme auto-adhésif en masse fondue.

11. Procédé pour la préparation de revêtements, en particulier de revêtements auto-adhésifs en masse fondue, **caractérisé**
**en ce que** des compositions selon l'une quelconque des revendications 1 à 8
a) sont fondues à des températures de 60 à 200°C
b) sont le cas échéant entreposées sous forme de masse fondue à des températures élevées
c) sont appliquées sous forme de masse fondue sur des substrats et
d) sont irradiées par de la lumière riche en énergie pour la réticulation.

12. Procédé selon la revendication 11, **caractérisé en ce qu'**au moins une des étapes de procédé a) à d) est réalisée dans des conditions aérobies, c'est-à-dire en présence d'oxygène de l'air.
